# EUROPÄISCHE PATENTSCHRIFT

(11) **EP 1 103 428 B1**
(45) Veröffentlichungstag und Bekanntmachung des Hinweises auf die Patenterteilung: **28.04.2004**
(21) Anmeldenummer: 00123029.1
(22) Anmeldetag: 24.10.2000
(51) Int. Cl.: B60R 19/18, B60R 21/34

(54) **Stossfängeranordnung**
Bumper assembly
Ensemble pare-chocs

(30) Priorität: 24.11.1999 DE 19956561
(43) Veröffentlichungstag der Anmeldung: 30.05.2001
(73) Patentinhaber: BENTELER AG, D-33104 Paderborn (DE)
(72) Erfinder: Härtel, Wulf, 33184 Altenbeken (DE); Göer, Peter, 33100 Paderborn (DE); Kröning, Achim, 33102 Paderborn (DE)
(74) Vertreter: Bockermann, Rolf, Dipl.-Ing.

(56) Entgegenhaltungen:
- EP-A- 0 950 828
- FR-A- 2 445 783
- FR-A- 2 741 413
- US-A- 4 076 295
- US-A- 5 404 974

## Beschreibung

Die Erfindung betrifft eine Stoßfängeranordnung für den durch eine Verschalung verkleideten Front- oder Heckbereich der Karosserie eines Personenkraftwagens gemäß den Merkmalen im Oberbegriff des Anspruchs 1.

In den letzten Jahren hat sich die Fachwelt in verstärktem Umfang nicht nur mit dem Schutz von Kraftfahrzeuginsassen bei Unfällen befasst, sondern sich zunehmend auch dem Schutz von Fußgängern zugewandt. Die Problematik eines Impacts zwischen einem Kraftfahrzeug und einem Fußgänger hat dadurch erheblich an Bedeutung gewonnen.

Gemäß einer geplanten internationalen Regelung zum fahrzeugseitigen Fußgängerschutz sollen Tests vorgeschrieben werden, bei denen von den Frontpartien der Kraftfahrzeuge folgende Situationen bestanden werden müssen;
- Impact mit einem Unterschenkel.
- Impact mit einem Oberschenkel.
- Impact mit der Hüfte.
- Impact mit dem Kopf auf einer Fronthaube eines Kraftfahrzeugs.

Besonders interessant sind in diesem Zusammenhang die Anforderungen an den Impact mit einem Unterschenkel, da diese in Zukunft Auswirkungen auf die Gestaltung und die Auslegung einer Stoßfängeranordnung haben. Hierbei sind die wesentlichen Anforderungen der geplanten internationalen Regelung wie folgt zusammenzufassen:
- Maximale Beschleunigung des Unterschenkels von 150 g.
- Maximale Scherung im Knie 6 mm.
- Maximaler Winkel zwischen Oberschenkel und Unterschenkel von 15°.

Im Umfang der gattungsgemäßen FR 2 741 413 A1 ist eine Stoßfängeranordnung bekannt, bei welcher ein Querträger in zwei in Längsrichtung eines Fahrzeugs hintereinander angeordnete Deformationsbereiche mit unterschiedlichem Deformationswiderstand aufgegliedert ist. Dieser Deformationswiderstand orientiert sich an den Aufprallgeschwindigkeiten eines Fahrzeugs auf ein Hindernis. Der Deformationsbereich mit dem größten Widerstand besteht aus einem im Querschnitt rechteckigen Holm, der unmittelbar mit den Längsträgern des Fahrzeugs verbunden ist. Vor dem Holm liegt ein Deformationsbereich mit einem geringeren Widerstand gegen Deformation. Diesem Deformationsbereich ist eine Verschalung aus Schaumstoff vorgelagert.

Prallt das Fahrzeug mit einer vergleichsweise geringen Geschwindigkeit von etwa 4 km/h auf ein Hindernis, sollen sich bestimmte Abschnitte des Deformationsbereichs mit dem geringeren Widerstand verformen. Bei höherer Geschwindigkeite nehmen alle Abschnitte des Deformationsbereichs mit dem geringeren Widerstand an einer Verformung teil. Trifft das Fahrzeug mit einer Geschwindigkeit oberhalb 15 km/h auf ein Hindernis, soll auch der Deformationsbereich mit dem größeren Widerstand sich verformen.

Der US-PS 4,076,295 ist ein Vorschlag zu entnehmen, bei welchem ein Fußgängerschutz in Form eines Querholms unterhalb der Stoßfängeranordnung vorgesehen ist. Dieser Querholm ist endseitig an vertikalen Stangen aufgehängt, die Bestandteil einer Sicherheitseinrichtung bilden, die starr der Stoßfängeranordnung zugeordnet ist.

Aus der EP 0 950 828 A1 ist es bekannt, Schaumblöcke im Abstand voneinander in Längsrichtung einer Stoßfängeranordnung zu integrieren.

Der Erfindung liegt - ausgehend vom Stand der Technik - die Aufgabe zugrunde, eine Stoßfängeranordnung so zu verbessern, dass bei einem Zusammenstoß eines Fahrzeugs mit einem Fußgänger dieser nicht unter das Fahrzeug gelangt, wobei insbesondere den Unterschenkeln von Fußgängern besondere Beachtung im Hinblick auf Verletzungen geschenkt werden soll.

Diese Aufgabe wird nach der Erfindung mit den im Anspruch 1 aufgeführten Merkmalen gelöst.

Danach wird bei einer Stoßfängeranordnung, welche einen endseitig über Distanzkonsolen und Anschlagplatten mit den Längsträgern der Karosserie verbundenen Querträger sowie einen unterhalb des Querträgers vorgesehenen Querholm umfasst, der Querträger mit einem mit den Distanzkonsolen verbundenen, sich über seine gesamte Länge erstreckenden, ausgesteiften Deformationsbereich, einen dem Deformationsbereich in Fahrtrichtung vorgelagerten und ebenfalls über seine gesamte Länge durchgehenden Verstärkungsbereich und mit einem von dem Verstärkungsbereich fixierten front- bzw. heckseitigen Schaumkörperbereich versehen.

Der Schaumkörperbereich besteht aus mehreren in Längsrichtung des Querträgers nebeneinander angeordneten Schaumblöcken und diese Schaumblöcke verbindenden Stegen. Die Verbindung der Schaumblöcke mittels Stege erleichtert ihren Einbau in die Stoßfängeranordnung, da nicht einzelne Schaumblöcke montiert werden müssen, sondern der Schaumkörperbereich als eine Komponente eingebracht werden kann. Durch diese Konstruktion kann die Beschleunigung eines Unterschenkels unter 150 g gehalten werden. Weiterhin dient der Schaumkörperbereich im Crashfall mit einem anderen Fahrzeug zur zusätzlichen Energieaufnahme. Eingesetzt werden bevorzugt Polyurethan-Schäume (PUR) und Polypropylen-Schäume (PP) mit Dichten von 30 g/l bis 500 g/l.

Die Wanddicke und das Material des Deformationsbereichs kann zur Optimierung der Energieaufnahmen für den Impact mit einem Fußgänger oder auch einem Fahrzeug variiert werden. Mittels des Verstärkungsbereichs kann der Deformationsbereich versteift werden. Außerdem dient der Verstärkungsbereich nicht nur zur Fixierung des Schaumkörperbereichs, sondern wirkt auch als Kompressionsweg für den Schaumkörperbereich. Dadurch hat die Stoßfängeranordnung eine vergleichsweise kurze Erstreckung in Fahrtrichtung. Auch der Verstärkungsbereich kann hinsichtlich des Materials und der Wanddicken je nach den Bedarfsanforderungen variiert werden. Das Material des Deformationsbereichs und des Verstärkungsbereichs kann Stahl oder Aluminium bzw. eine Aluminium-Legierung sein.

Die Festlegung der Schaumblöcke erfolgt mit den Merkmalen des Anspruchs 2. Danach durchsetzen die Schaumblöcke Aussparungen in dem Verstärkungsbereich und sind an einem Vertikalsteg des Deformationsbereichs abgestützt.

Eine Variante der Stoßfängeranordnung wird in den Merkmalen des Anspruchs 3 erblickt. Der Deformationsbereich und der Verstärkungsbereich bestehen hierbei aus im Querschnitt U- bzw. trapezförmig profilierten Pressteilen mit oberen und unteren Flanschen, wobei die Pressteile über ihre Flansche miteinander verbunden sind. Der Deformationsbereich ist bevorzugt U-förmig ausgebildet. Die Flansche erstrecken sich senkrecht. Der Verstärkungsbereich hat eine trapezförmige Profilierung. Seine Flansche liegen auf den Flanschen des Deformationsbereichs. Die Verbindung erfolgt bevorzugt durch Punktschweißung. Auch andere Verbindungsarten, z.B. Kleben, sind denkbar.

Bei dieser Ausführungsform werden die Aussparungen für die Schaumblöcke durch einzelne an den Querschnitt der Schaumblöcke angepasste Öffnungen im Vertikalsteg des Verstärkungsbereichs gebildet. Auf diese Weise erhalten die Schaumblöcke eine zusätzliche Führung.

Wenn nach Anspruch 4 der Vertikalsteg des Deformationsbereichs mit einer zum Verstärkungsbereich vorstehenden Sicke versehen ist, so kann über die Tiefe dieser Sicke, an der sich die Schaumblöcke abstützen, die Einstellung der Länge der Schaumblöcke erfolgen.

Je nach den jeweiligen Anforderungen kann entsprechend Anspruch 5 der Vertikalsteg des Verstärkungsbereichs gegenüber dessen Flansche in Richtung zum Vertikalsteg des Deformationsbereichs vorstehen oder gemäß Anspruch 6 in Fahrtrichtung vorstehen.

Zur weiteren Versteifung des Deformationsbereichs sind dessen Flansche nach Anspruch 7 mit gegen die Fahrtrichtung abgewinkelten randseitigen Schenkeln versehen.

Eine weitere vorteilhafte Ausführungsform der Erfindung wird in den Merkmalen des Anspruchs 8 gesehen. Danach bilden der Deformationsbereich und der Verstärkungsbereich Bestandteile eines einstückigen Strangpressprofils. Dieses besteht bevorzugt aus Aluminium oder einer Aluminiumlegierung. Ein nach dem Strangpressen sich anschließendes Streckbiegen kann dem Querträger bei Bedarf noch eine weitere Krümmung geben.

Gemäß Anspruch 9 ist der Deformationsbereich durch Längsrippen ausgesteift. Diese können in verschiedenster Konfiguration vorgesehen sein. Denkbar sind beispielsweise sich kreuzende Rippen. Auch der Vertikalsteg des Deformationsbereichs kann insgesamt zur Versteifung der Stoßfängeranordnung herangezogen werden.

Im Rahmen der weiteren Ausführungsform sehen die Merkmale des Anspruchs 10 vor, dass der Verstärkungsbereich zwei in Fahrtrichtung vorstehende Längsrippen aufweist, deren freien Ränder eine kanalartige Aussparung für den Schaumkörperbereich, insbesondere in Form von durch Stege verbundenen Schaumblöcken, begrenzen. Insbesondere können zur besseren Führung des Schaumkörperbereichs die Ränder der Längsrippen nach innen umgebogen und mit breiten Anlageflächen für den Schaumkörperbereich versehen sein.

Die Erfindung ist nachfolgend anhand von in den mittels CAD erstellten Zeichnungen dargestellten Ausführungsbeispielen näher erläutert. Es zeigen:
- Figur 1: in der Perspektive, teilweise im Schnitt, eine Stoßfängeranordnung für den Frontbereich der Karosserie eines Personenkraftwagens;
- Figur 2: die Darstellung der Figur 1 in Richtung des Pfeils II gesehen;
- Figur 3: einen vertikalen Querschnitt durch die Darstellung der Figur 1 entlang der Linie III-III in Richtung der Pfeile IIIa gesehen;
- Figur 4: eine Darstellung ähnlich derjenigen der Figur 1, jedoch ohne Verschalung und Schaumkörperbereich;
- Figur 5: einen vertikalen Querschnitt durch die Darstellung der Figur 4 entlang der Linie V-V in Richtung der Pfeile Va gesehen;
- Figur 6: im vertikalen Querschnitt einen Querträger einer Stoßfängeranordnung gemäß einer weiteren Ausführungsform ohne Schaumkörperbereich und
- Figur 7: die Darstellung der Figur 6 mit einem Schaumkörperbereich.

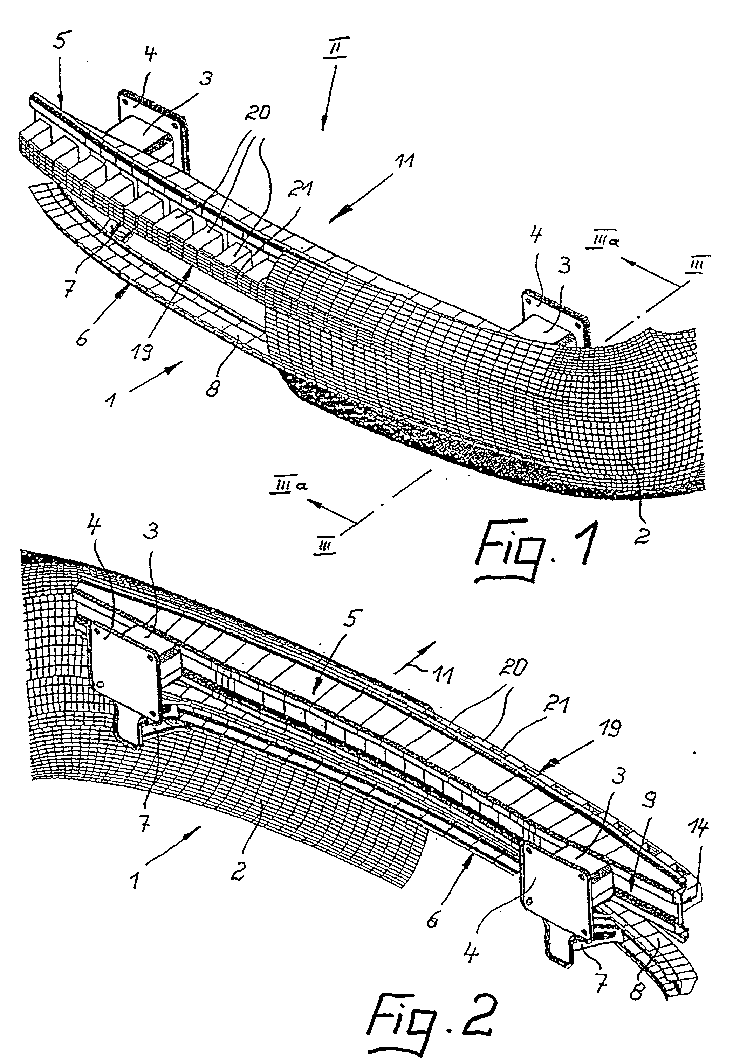

In den Figuren 1 bis 5 ist mit 1 eine Stoßfängeranordnung für den durch eine Verschalung 2 verkleideten Frontbereich der ansonsten nicht näher dargestellten Karosserie eines Personenkraftwagens bezeichnet.

Die Stoßfängeranordnung 1 umfasst einen endseitig über aus rechteckigen Hohlprofilen bestehenden Distanzkonsolen 3 und Anschlagplatten 4 mit den nicht näher dargestellten Längsträgern der Karosserie verbundenen Querträger 5 sowie einen unterhalb des Querträgers 5 vorgesehenen Querholm 6 Der Querholm 6 ist unterhalb der Distanzkonsolen 3 über schräg verlaufende Distanzstreben 7 mit den Anschlagplatten 4 verbunden. Er ist im Querschnitt als U-Profil gestaltet und nimmt eine Schaumstoffschicht 8 als Energie absorbierendes Material auf.

Vor dem Querträger 5 und dem Querholm 6 erstreckt sich in weitgehend U-förmiger Konfiguration die Verschalung 2 aus Kunststoff.

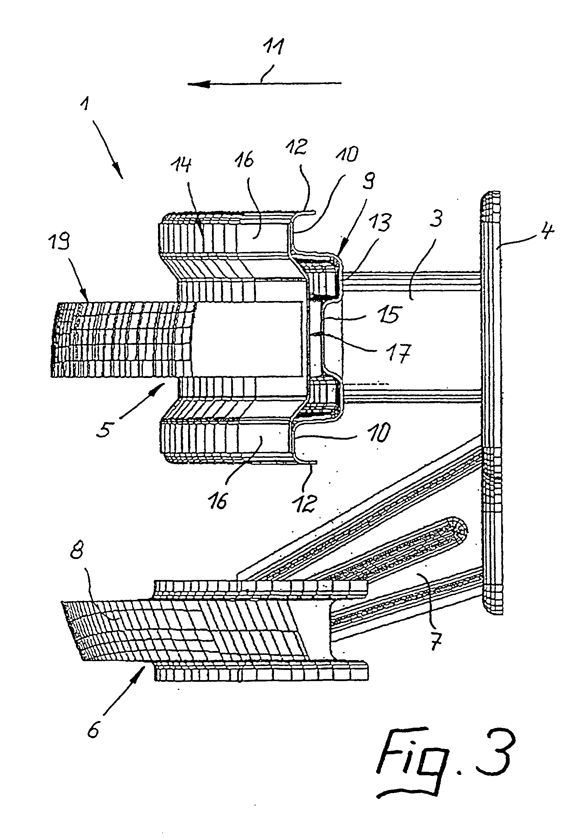

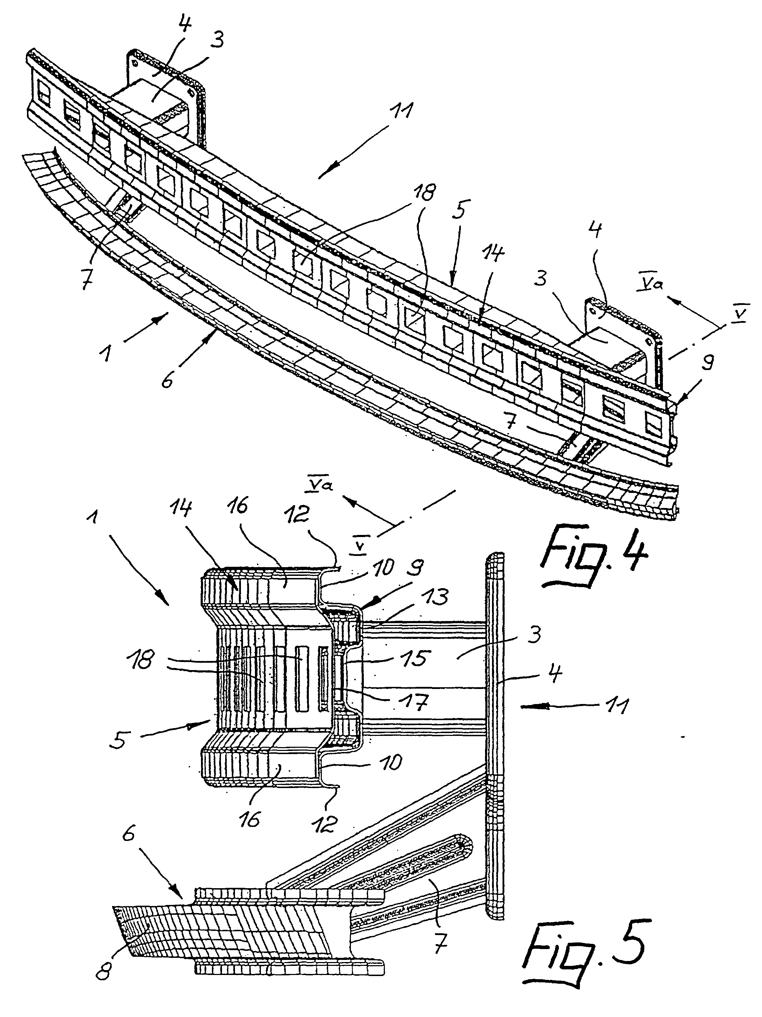

Der Querträger 5 weist einen Deformationsbereich 9 aus einem U-förmig profilierten Pressteil mit oberen und unteren senkrechten Flanschen 10 auf. Die Flansche 10 sind mit gegen die Fahrtrichtung 11 abgewinkelten randseitigen Schenkeln 12 versehen (Figuren 3 und 5). Der Vertikalsteg 13 des Deformationsbereichs 9 ist mit einer zu einem Verstärkungsbereich 14 vorstehenden Sicke 15 ausgerüstet. Alle Übergänge sind gerundet.

Der Verstärkungsbereich 14 ist als trapezförmig profilierter Pressteil mit oberen und unteren Flanschen 16 ausgebildet. Die Flansche 10, 16 des Deformationsbereichs 9 und des Verstärkungsbereichs 14 sind miteinander verbunden. Der Vertikalsteg 17 des Verstärkungsbereichs 14 steht gegenüber dessen Flansche 16 in Richtung zum Vertikalsteg 13 des Deformationsbereichs 9 vor.

Im Vertikalsteg 17 des Verstärkungsbereichs 14 sind in Längsrichtung des Querträgers 5 verteilt mehrere rechteckige Aussparungen 18 vorgesehen. Die Aussparungen 18 dienen der Aufnahme eines Schaumkörperbereichs 19 in Form von Schaumblöcken 20, die durch Stege 21 miteinander verbunden sind. Die Schaumblöcke 20 stützen sich an der Sicke 15 am Vertikalsteg 13 des Deformationsbereichs 9 ab.

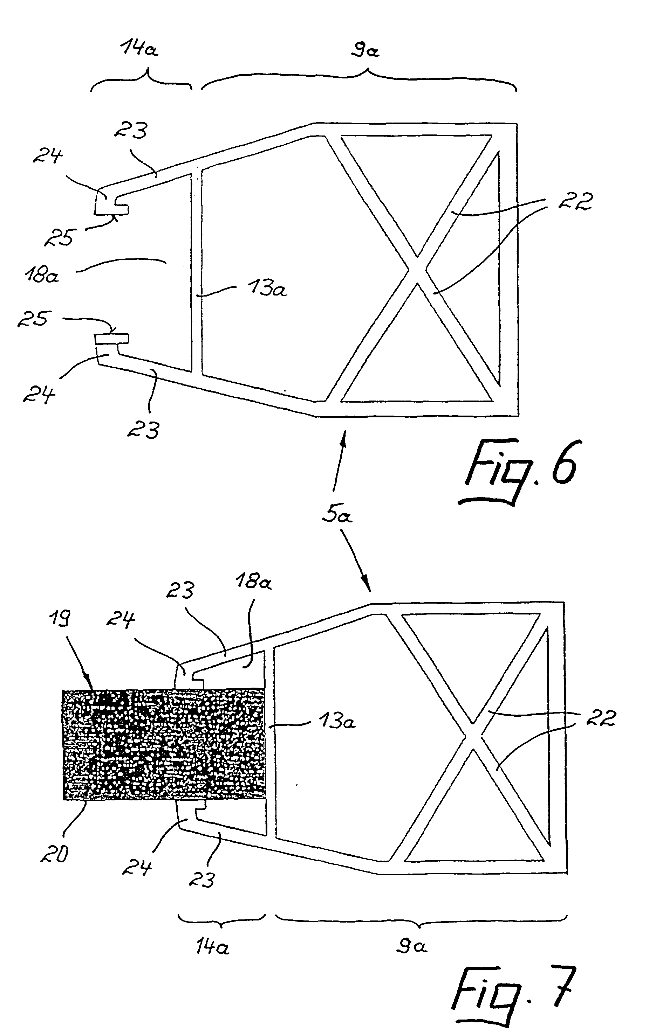

Die in den Figuren 6 und 7 im Schema veranschaulichte Ausführungsform eines Querträgers 5a für eine ansonsten nicht näher veranschaulichte Stoßfängeranordnung besitzt einen Deformationsbereich 9a und einen Verstärkungsbereich 14a die Bestandteile eines einstückigen Strangpressprofils bilden. Die Distanzkonsolen 3 und Anschlagplatten 4 gemäß den Figuren 1 bis 5 sind in den Figuren 6 und 7 weggelassen worden.

Der Deformationsbereich 9a ist durch kreuzförmig angeordnete Längsrippen 22 verstärkt. Er weist einen Vertikalsteg 13a auf, der, wie die Figur 7 zu erkennen gibt, der Abstützung der aus den Figuren 1 und 2 erkennbaren, durch Stege 21 verbundenen Schaumblöcke 20 dient.

Zur Führung der Schaumblöcke 20 weist der Verstärkungsbereich 14a zwei in Fahrtrichtung vorstehende Längsrippen 23 auf. Deren freien Ränder 24 begrenzen eine kanalartige Aussparung 18a für die Schaumblöcke 20. Zu diesem Zweck sind die freien Ränder 24 nach innen umgebördelt, so dass sich Anlageflächen 25 ergeben (Figur 6).

Der Querträger 5a der Figuren 6 und 7 kann mit einem Querholm 6 gemäß den Figuren 1 bis 5 zusammen eingesetzt werden. Auch eine entsprechende Verschalung 2 ist vorstellbar, so dass von einer nochmaligen Erläuterung Abstand genommen wird.

### Bezugszeichenaufstellung

- 1 -: Stoßfängeranordnung
- 2 -: Verschalung
- 3 -: Distanzkonsolen
- 4 -: Anschlagplatten
- 5 -: Querträger
5a - Querträger
- 6 -: Querholm
- 7 -: Distanzstreben
- 8 -: Schaumstoffschicht
- 9 -: Deformationsbereich v. 5
9a - Deformationsbereich v. 5a
- 10 -: Flansche v. 9
- 11 -: Fahrtrichtung
- 12 -: Schenkel v. 10
- 13 -: Vertikalsteg v. 9
13a - Vertikalsteg v. 9a
- 14 -: Verstärkungsbereich v. 5
14a - Verstärkungsbereich v. 5a
- 15 -: Sicke in 13
- 16 -: Flansche v. 14
- 17 -: Vertikalsteg v. 14
- 18 -: Aussparungen in 17
- 18a -: Aussparung in 14a
- 19 -: Schaumkörperbereich
- 20 -: Schaumblöcke
- 21 -: Stege zw. 20
- 22 -: Längsrippen v. 9a
- 23 -: Längsrippen v. 14a
- 24 -: freie Ränder v. 23
- 25 -: Anlageflächen

## Patentansprüche

1. Stoßfängeranordnung für den durch eine Verschalung (2) verkleideten Front- oder Heckbereich der Karosserie eines Personenkraftwagens, welche einen mit den Längsträgern der Karosserie verbundenen Querträger (5, 5a) aufweist, der sich aus einem über seine gesamte Länge erstreckenden ausgesteiften Deformationsbereich (9, 9a), einem dem Deformationsbereich (9, 9a) in Fahrtrichtung (11) vorgelagerten sowie ebenfalls über seine gesamte Länge durchgehenden Verstärkungsbereich (14, 14a) und einem von dem Verstärkungsbereich (14, 14a) fixierten front- bzw. heckseitigen Schaumkörperbereich (19) zusammensetzt, wobei der Deformationsbereich (9, 9a) des Querträgers (5, 5a) endseitig über Distanzkonsolen (3) und Anschlagplatten (4) mit den Längsträgern verbunden ist, **dadurch gekennzeichnet, dass** unterhalb des Querträgers (5, 5a) ein Querholm (6) vorgesehen ist, und der Schaumkörperbereich (19) aus mehreren in Längsrichtung des Querträgers (5, 5a) nebeneinander angeordneten Schaumblöcken (20) und diese Schaumblöcke (20) verbindenden Stegen (21) besteht.

2. Stoßfängeranordnung nach Anspruch 1, **dadurch gekennzeichnet, dass** die Schaumblöcke (20) Aussparungen (18, 18a) in dem Verstärkungsbereich (14, 14a) durchsetzen und an einem Vertikalsteg (13, 13a) des Deformationsbereichs (9, 9a) abgestützt sind.

3. Stoßfängeranordnung nach Anspruch 1 oder 2, **dadurch gekennzeichnet, dass** der Deformationsbereich (9) und der Verstärkungsbereich (14) aus im Querschnitt U- bzw. trapezförmig profilierten Pressteilen mit oberen und unteren Flanschen (10, 16) bestehen, wobei die Pressteile über ihre Flansche (10, 16) miteinander verbunden sind.

4. Stoßfängeranordnung nach Anspruch 3, **dadurch gekennzeichnet, dass** ein Vertikalsteg (13) des Deformationsbereichs (9) mit einer zum Verstärkungsbereich (14) vorstehenden Sicke (15) versehen ist.

5. Stoßfängeranordnung nach Anspruch 3 oder 4, **dadurch gekennzeichnet, dass** ein Vertikalsteg (17) des Verstärkungsbereichs (14) gegenüber dessen Flanschen (16) in Richtung zu einem Vertikalsteg (13) des Deformationsbereichs (9) vorsteht.

6. Stoßfängeranordnung nach Anspruch 3 oder 4, **dadurch gekennzeichnet, dass** ein Vertikalsteg (17) des Verstärkungsbereichs (14) gegenüber dessen Flanschen (16) in Fahrtrichtung (11) vorsteht.

7. Stoßfängeranordnung nach einem der Ansprüche 3 bis 6, **dadurch gekennzeichnet, dass** die Flansche (10) des Deformationsbereichs (9) mit gegen die Fahrtrichtung (11) abgewinkelten randseitigen Schenkeln (12) versehen sind.

8. Stoßfängeranordnung nach Anspruch 1 oder 2, **dadurch gekennzeichnet, dass** der Deformationsbereich (9a) und der Verstärkungsbereich (14a) des Querträgers (5a) Bestandteile eines einstückigen Strangpressprofils bilden.

9. Stoßfängeranordnung nach Anspruch 8, **dadurch gekennzeichnet, dass** der Deformationsbereich (9a) durch Längsrippen (22) ausgesteift ist.

10. Stoßfängeranordnung nach Anspruch 8, **dadurch gekennzeichnet, dass** der Verstärkungsbereich (14a) zwei in Fahrtrichtung (11) vorstehende Längsrippen (23) aufweist, deren freien Ränder (24) eine kanalartige Aussparung (18a) für einen Schaumkörperbereich (19) begrenzen.

## Claims

1. A bumper arrangement for the front or rear zone of the bodywork of a private motor vehicle, said zone being covered by a panelling (2), said arrangement comprising a cross member (5, 5a) connected to the longitudinal members of the bodywork and consisting of a reinforced deformation zone (9, 9a) extending over its entire length, a reinforcement zone (14, 14a) preceding the deformation zone (9, 9a) in the direction of travel (11) and also extending continuously over its entire length, and a front or rear foam member zone (19) fixed by the reinforcement zone (14, 14a), the deformation zone (9, 9a) of the cross member (5, 5a) being connected at the ends to the longitudinal members via spacer brackets (3) and abutment plates (4), **characterised in that** a transverse spar (6) is provided beneath the cross member (5, 5a) and the foam member zone (19) consists of a plurality of foam blocks (20) disposed side by side in the longitudinal direction of the cross member (5, 5a), and of webs (21) connecting said foam blocks (20).

2. A bumper arrangement according to claim 1, **characterised in that** the foam blocks (20) extend through openings (18, 18a) in the reinforcement zone (14, 14a) and are supported against a vertical web (13, 13a) of the deformation zone (9, 9a).

3. A bumper arrangement according to claim 1 or 2, **characterised in that** the deformation zone (9) and the reinforcement zone (14) consist of pressings having a U-shaped or trapezoidal profile in cross-section and top and bottom flanges (10, 16), the pressings being interconnected via their flanges (10, 16).

4. A bumper arrangement according to claim 3, **characterised in that** a vertical web (13) of the deformation zone (9) is provided with a corrugation (15) projecting towards the reinforcement zone (14).

5. A bumper arrangement according to claim 3 or 4, **characterised in that** a vertical web (17) of the reinforcement zone (14) projects relatively to the flanges (16) thereof in the direction of a vertical web (13) of the deformation zone (9).

6. A bumper arrangement according to claim 3 or 4, **characterised in that** a vertical web (17) of the reinforcement zone (14) projects in the direction of travel (11) relatively to the flanges (16) thereof.

7. A bumper arrangement according to any one of claims 3 to 6, **characterised in that** the flanges (10) of the deformation zone (9) are provided with edge limbs (12) which are bent off in opposition to the direction of travel (11).

8. A bumper arrangement according to claim 1 or 2, **characterised in that** the deformation zone (9a) and the reinforcement zone (14a) of the cross member (5a) form parts of a one-piece extruded profile.

9. A bumper arrangement according to claim 8, **characterised in that** the deformation zone (9a) is reinforced by longitudinal ribs (22).

10. A bumper arrangement according to claim 8, **characterised in that** the reinforcement zone (14a) comprises two longitudinal ribs (23) projecting in the direction of travel (11), the free edges (24) thereof defining a channel-like opening (18a) for a foam member zone (19).

## Revendications

1. Ensemble de pare-chocs pour la zone avant ou arrière, habillée par un coffrage (2), de la carrosserie d'une voiture automobile, qui présente une traverse (5, 5a) reliée aux longerons de la carrosserie, laquelle se compose d'une zone de déformation (9, 9a) renforcée s'étendant sur toute sa longueur, d'une zone de renfort (14, 14a) placée en avant de la zone de déformation (9, 9a) dans le sens de marche (11) et également continue sur toute sa longueur et d'une zone de corps en mousse (19) côté avant et/ou côté arrière fixée par la zone de renfort (14, 14a), moyennant quoi la zone de déformation (9, 9a) de la traverse (5, 5a) est reliée côté extrémité par des consoles d'espacement (3) et des plaques de butée (4) aux longerons, **caractérisé en ce qu'**un longeron transversal (6) est prévu au-dessous de la traverse (5, 5a), et la zone du corps en mousse (19) se compose de plusieurs blocs de mousse (20) disposés les uns à côté des autres dans le sens longitudinal de la traverse (5, 5a) et d'entretoises (21) reliant ces blocs de mousse (20).

2. Ensemble de pare-chocs selon la revendication 1, **caractérisé en ce que** les blocs de mousse (20) traversent des évidements (18, 18a) dans la zone de renfort (14, 14a) et sont appuyés sur une barrette verticale (13, 13a) de la zone de déformation (9, 9a).

3. Ensemble de pare-chocs selon la revendication 1 ou 2, **caractérisé en ce que** la zone de déformation (9) et la zone de renfort (14) sont constituées de pièces pressées profilées en forme de U ou de trapèze vues en coupe avec des brides supérieures et inférieures (10, 16), les pièces pressées étant reliées entre elles par leurs brides (10, 16).

4. Ensemble de pare-chocs selon la revendication 3, **caractérisé en ce qu'**une barrette verticale (13) de la zone de déformation (8) est pourvue d'une moulure (15) saillante par rapport à la zone de renfort (14).

5. Ensemble de pare-chocs selon la revendication 3 ou 4, **caractérisé en ce qu'**une barrette verticale (17) de la zone de renfort (14) fait saillie par rapport aux brides (16) de cette zone en direction d'une barrette verticale (13) de la zone de déformation (9).

6. Ensemble de pare-chocs selon la revendication 3 ou 4, **caractérisé en ce qu'**une barrette verticale (17) de la zone de renfort (14) fait saillie par rapport aux brides (16) de cette zone dans le sens de la marche (11).

7. Ensemble de pare-chocs selon l'une quelconque des revendications 3 à 6, **caractérisé en ce que** les brides (10) de la zone de déformation (9) sont pourvues de brides (12) en bordure coudées à l'opposé du sens de la marche (11).

8. Ensemble de pare-chocs selon la revendication 1 ou 2, **caractérisé en ce que** la zone de déformation (9a) et la zone de renfort (14a) de la traverse (5a) forment des éléments constitutifs d'un profilé extrudé d'une seule pièce.

9. Ensemble de pare-chocs selon la revendication 8, **caractérisé en ce que** la zone de déformation (9a) est renforcée par des nervures longitudinales (22).

10. Ensemble de pare-chocs selon la revendication 8, **caractérisé en ce que** la zone de renfort (14a) présente deux nervures longitudinales (23) saillantes dans le sens de la marche (11), dont les bords libres (24) délimitent un évidement (18a) en forme de canal pour une zone de corps en mousse (19).
